# EUROPEAN PATENT SPECIFICATION

(11) **EP 3 669 667 B1**
(45) Date of publication and mention of the grant of the patent: **20.01.2021**
(21) Application number: 19213554.9
(22) Date of filing: 04.12.2019
(51) Int. Cl.: A23L 13/00, A23L 23/00, A23L 13/10, A23L 19/00

(54) **PROCESS FOR THE PRODUCTION OF A SAUCE CONTAINING MEAT**
PROZESS FÜR DIE HERSTELLUNG VON FLEISCHHALTIGEN SAUCE
PROCÉDÉ DE FABRICATION D'UNE SAUCE CONTENANT DE LA VIANDE

(30) Priority: 21.12.2018 IT 201800020899
(43) Date of publication of application: 24.06.2020
(73) Proprietor: BARILLA G. e R. Fratelli S.p.A., 43100 Parma (IT)
(72) Inventor: DE TATA, Vincenzo, 43125 Parma (IT); PONANTI, Marcella, 43121 Parma (IT); BETTEGA, Fabio, 43039 Salsomaggiore Terme (PR) (IT); SPOTTI, Andrea, 43036 Fidenza (PR) (IT); ALBERTI, Roberto, 43123 Parma (IT)
(74) Representative: Ferreccio, Rinaldo

(56) References cited:
- EP-A1- 0 882 406
- EP-A2- 2 294 933
- WO-A1-92/03938
- WO-A1-2016/159221
- WO-A2-2006/116033
- US-A- 4 612 203
- DATABASE GNPD [Online] MINTEL; 23 February 2015 (2015-02-23), anonymous: "Bolognese Sauce", XP055586542, retrieved from www.gnpd.com Database accession no. 3000721

## Description

### Field of application

The present invention relates to the technical sector of the food industry. In particular, the invention relates to a process for the production of a sauce containing meat, such as a meat ragu.

### Prior art

Ragù is one of the most popular sauces in Italian and international cuisine and is typically used as a condiment for first courses. It is known that the preparation of this sauce is somewhat laborious and requires a long time for cooking of the minced meat (usually beef and pork) and the chosen vegetables, in order to develop the characteristic flavors and aromas and obtain a pleasing consistency of the minced meat when tasted.

According to the traditional recipe of ragù the meat is characterized by a certain granular consistency and the particles of minced meat, although homogeneously integrated in the sauce, can still be tasted in the mouth following cooking, because of their characteristic consistency.

Precisely because of the long time required for preparation of the ragù, the consumer is often induced to buy industrially prepared ready-to-use sauces, which may be sterilized sauces packaged in tins or glass jars and able to be stored at room temperature, or packaged pasteurized sauces which are stored at refrigerator temperature, or finally deep-frozen sauces, which have also undergone a pasteurization process.

However, the consistency of the commercially made ready-to-use ragu sauces does not always satisfy fully the consumer, because they are often in the form of a homogeneous mixture of minced meat, spices, vegetables and tomato sauce, in which the particles of minced meat cannot always be perceived by the taste buds. This is due to the fact that the procedures conventionally employed for the industrial preparation of meat-based sauces involve a reduction in the size of the minced meat particles.

The aforementioned conventional procedures consist essentially in a repetition of the operations performed on a small scale, but in much more strictly controlled operating conditions, in order to ensure optimum microbiological properties of the finished product. According to these procedures, the minced meat is added to a fried mixture of vegetables and/or edible oils inside a large cooker provided with mixing means, followed by the addition of a tomato sauce and any further ingredients, such as flavorings and spices.

The ratio between the volume of the cooker and the heating surface is such that only the meat in contact with the walls of the cooker undergoes a real browning process, while the remaining part is "simmered". Moreover, in order to prevent burning against the hot walls, the meat is continuously mixed, being subject to a mechanical stress which reduces the size of the meat particles, with the result that in the final sauce the meat is in the form of minute particles, which cannot be easily perceived when eaten and moreover has a "dry" consistency in terms of taste. WO2016/159221 discloses a method for producing sauce containing minced meat comprises: a step in which raw minced meat is treated with heat in an oven into which steam has been introduced, and the moisture content in the minced meat is adjusted after being treated with heat in the oven so as to decrease to 58-70 mass% of the moisture content in the raw minced meat; and a step in which sauce is produced using the minced meat after being treated with heat in the oven having a temperature of 200-300°C for 60-300 seconds.

The problem underlying the present invention is that of providing a meat-based sauce, in particular a ragu, which is ready-to-use and where the particle size of the minced meat is such that the particles of cooked meat may be perceived when eaten by the consumer.

### Summary of the invention

The problem has been solved by providing a process for the production of a sauce comprising minced meat, tomato, vegetables, edible oils or fats and optional complementary ingredients, wherein the process comprises:
- a step a) of subjecting pellets of a mixture comprising minced meat to baking in a conduction and convection oven, at a temperature of between 160°C and 280°C, for a time of between 0.5 and 30 minutes, thus obtaining baked pellets,
- a step b) of adding, in a cooker, said baked pellets to said tomato, vegetables, oils or edible oils or fats and optional complementary ingredients and
- a step c) of cooking the whole mixture for a predetermined time.

The term "complementary ingredients" is understood as meaning the ingredients which complement the recipe in which the product according to the present invention is used. These complementary ingredients serve to give flavor to the meat-based sauce according to the invention and comprise for example salt, pepper, sugar and aromatic herbs including rosemary, sage, mint, oregano, parsley, thyme, bay leaf, cloves, basil, chives, marjoram, nutmeg and coriander.

The aforementioned vegetables are obviously different from tomato and are preferably chosen from the group comprising onion, shallot, leek, carrot, celery, garlic and parsley.

Preferably, these vegetables are minced and have a particle size of between 3 mm and 20 mm, more preferably between 5 mm and 10 mm.

Preferably the aforementioned mixture pellets comprising minced meat have a length of between 10 mm and 70 mm, more preferably between 30 mm and 40 mm, and a thickness of between 3 and 15 mm.

Preferably, said pellets comprise, in addition to meat, at least one complementary ingredient selected from the group comprising salt, sugar, starch, fiber, pepper, aromatic herbs including rosemary, sage, mint, oregano, parsley, thyme, bay leaf, cloves, basil, chives, marjoram, nutmeg and coriander and optionally tomato and/or at least one of said vegetables including onion, shallot, leek, carrots, celery and garlic.

The aforementioned edible oils or fats are preferably selected from the group comprising olive oil (in particular, extra virgin olive oil), sunflower oil, peanut oil, soya oil, rapeseed oil, corn oil and butter,
Preferably, in the aforementioned step a), the aforementioned pellets are arranged on a conveyor belt and the oven is a tunnel oven inside which the conveyor belt runs.

Preferably, said conveyor belt is heated to a temperature of 160°-280°C, advantageously 220°-260°C.

The temperature inside the tunnel oven is preferably between 180°C and 280°C, advantageously between 220°C and 260°C, and in the tunnel oven means for injecting jets of steam and hot air (at a temperature of 200°-300°C, preferably 230°C-280°C) are provided.

The mixture pellets comprising minced meat may be produced by extruding a mixture comprising minced meat and optionally one or more complementary ingredients as defined above and/or tomato and/or one or more vegetables as defined above, by means of an extruder provided with a cutter which divides the mixture output from the extruder into pellets having a length of between 10 mm and 70 mm, preferably between 30 mm and 40 mm, and a thickness of between 3 and 15 mm.

The pellets thus produced are dropped onto a conveyor belt of a tunnel oven and conveyed away to the aforementioned baking step a) in an oven.

Preferably, upon leaving the oven the pellets are dropped onto a second conveyor belt which conveys them to a disaggregation apparatus to free the individual pellets from any clumps formed during baking.

The pellets following baking in an oven generally have a length of between 5 and 60 mm, preferably between 7 and 30 mm.

Upon leaving the oven, the baked pellets fall onto a grille where they are drained, with removal of the residual liquid component from the baking oven.

The pellets are then dropped onto a conveyor belt which conveys them inside a vertical hopper. Here, once they have fallen, the pellets enter a disaggregation apparatus, in technical jargon also called a "delumper" or "lump breaker", which reduces to a smaller size any lumps which may have formed during baking in the oven.

The pellets thus obtained are finally conveyed to step b), introducing them into a cooker which is provided with mixing means and inside which are there already vegetables and optionally the complementary ingredients fried beforehand in an edible oil or fat as well as the tomato (in the form of pulp or puree and/or concentrate) which is then added to the fried mixture.

After optionally adding one or more complementary ingredients, the whole mixture is kept at a temperature of between 70 and 100°C while continuously mixing, for a time of between 15 and 120 minutes.

The minced meat used for the process according to the invention may be bovine, pork, ovine, horse, poultry or fish meat. Preferably, it consists of bovine or pork meat or both.

The minced meat used for the preparation of the pellets employed in the process according to the invention is obtained from blocks of meat which are subjected to grinding in a meat mincer resulting in minced meat with a particle size of between 6 and 20 mm.

The minced meat thus obtained then optionally has, added thereto, one or more complementary ingredients selected from the group comprising salt, sugar, starch, fiber, pepper and aromatic herbs including rosemary, sage, mint, oregano, parsley, thyme, bay leaf, cloves, basil, chives, marjoram, nutmeg and coriander, and/or tomato and/or one or more vegetables selected from onion, shallot, leek, carrots, celery and garlic, and is mixed with them in a mixer for a few (1-10) minutes, and the mixture thus obtained is then fed to a subsequent meat mincer, so as to obtain particles of minced meat mixture with a size of 3-10 mm, which are finally conveyed to the extruder described further above to form the aforementioned pellets of minced meat mixture.

Oven baking of the pellets of minced meat mixture is performed without subjecting the pellets to any mechanical stress, unlike that which happens in the conventional process which involves the browning of the minced meat in a cooker provided with mixing means and therefore results in a reduction in the size of the meat particles and loss of consistency thereof. In the process according to the present invention, instead, baking in an oven without mechanical stress preserves the size of the pellets and their consistency.

The above has been confirmed experimentally by means of comparative tests carried on meat ragù prepared using identical recipes (same ingredients in the same amounts) on the one hand using the conventional process described further above and on the other hand using the process according to the present invention. The tasters used for these comparative tests have confirmed that the ragù obtained with the process according to the present invention had a taste of browned meat which was much rounder and more intense and in particular was such that the consistency of the minced meat particles could be much more distinctly perceived by the taste buds.

### Detailed description of a preferred embodiment

The process according to the present invention will be further described with reference to an example of application provided hereinbelow by way of non-limiting illustration.

### EXAMPLE

### Ragù bolognese

Blocks of bovine meat (front quarter cuts) and pork (frozen shoulder), kept stored in a cold room at -20°C, were used for the production of ragu bolognese using the process according to the present invention.

These blocks of meat were defrosted in a radiofrequency (RF) tunnel for about 40 minutes. The blocks of defrosted meat were then fed to the hopper of a first meat mincer, producing minced meat with particles having a size of about 13 mm.

The minced meat thus obtained (300 kg) was fed into a mixer and 3.5 kg of salt were added thereto. After mixing for two minutes at a speed of 0.6 rpm, the mixture thus obtained was fed to the hopper of a second meat mincer, which reduced the size of the pellets in sequence first to 7.8 mm and then to 4 mm.

Thereafter the mixture was conveyed to an extruder with holes having a size of 4x4 mm, provided with a cutter, which divided the strings of mixture into pellets with a thickness of about 4 mm, a length of about 36 mm and a weight of about 0.6 g.

These pellets were dropped onto a conveyor belt heated to a temperature of 260°C and conveyed by the latter inside a convection tunnel oven (air temperature 280°C). After remaining inside the tunnel oven for about 2 minutes, the baked pellets leaving the oven were transferred onto a second conveyor belt, where they were drained, namely the baked pellets were separated from the liquid generated during baking.

The aforementioned second conveyor belt then conveyed the baked and drained pellets to the aforementioned disaggregation apparatus where the single pellets were separated from any lumps which may have formed during baking.

The baked pellets had a length of about 11-13 mm, a thickness of about 5-7 mm and a weight of about 0.17 g.

The following ingredients were introduced inside a cooker provided with a horizontal-paddle mixer:

| | |
|---|---|
| Sunflower oil | 70 kg |
| Chopped onions | 250 kg |
| Chopped carrots | 105 kg |
| Chopped celery | 110 kg |

The chopped onions, carrots and celery had a particle size of about 4-10 mm.

After cooking the aforementioned ingredients at boiling temperature for 27 minutes with continuous mixing, the following ingredients were introduced into the cooker:

| | |
|---|---|
| Tomato | 900 kg |
| Cooked meat pellet | 550 kg |
| Salt | 19 kg |
| Sugar | 14 kg |
| Aromatic herbs and spices | 3 kg |

Thereafter (after about 20 minutes) the following premixed ingredients were added:

| | |
|---|---|
| Corn starch | 25 kg |
| Yeast extract | 10 kg |

Finally (immediately following the addition of starch and yeast) a second amount of tomato (400 kg) was added and heated for 30 minutes.

The meat ragù thus obtained was heated to a temperature of 90-95°C and filled into 400 g glass jars and these were finally sterilized in an autoclave with F0 = 8 minutes (TBC).

### COMPARATIVE EXAMPLE

A ragu bolognese was prepared using the same ingredients used in the preceding example and in the same amounts, with the difference that the minced meat (350 kg) obtained at the outlet of the first meat mincer was introduced, together with the salt (3.5 kg), into a first cooker provided with horizontal-paddle mixer and cooked for about 30 minutes with continuous mixing.

At the end of cooking, the meat was transferred into a second cooker provided with a horizontal-paddle mixer inside which the chopped onions, the chopped carrots and the chopped celery had already been browned in sunflower oil in the amounts and using the methods described in the preceding example. Tomato, salt, sugar, aromatic herbs and spaces were also introduced into the cooker in the same amounts as in the preceding example, after about 20 minutes corn starch and yeast extract were added in the same amounts as in the preceding example, followed immediately thereafter by the same amount of tomato as in the preceding example, and cooking performed for a further 30 minutes.

The meat ragù thus obtained was then heated to a temperature of 90-95°C and filled into 400 g glass jars which were finally sterilized in an autoclave with F0 = 8 minutes.

The ragù prepared according to the example of the present invention was subjected to a tasting test for comparison with the ragù prepared according to the comparative example.

The two ragù preparations were tasted by 160 consumers of meat sauces who were asked to rate on a scale from 0 to 9 the organoleptic and structural characteristics of the two ragù sauces, with particular reference to the consistency, taste and appearance of the meat.

A significant preference was expressed for the ragù prepared according to the example of the present invention, with the following ratings:

| Characteristics | Ragù according to the invention | Ragù according to the comparative example |
|---|---|---|
| Overall impression | 6.1 | 5.3 |
| Appearance | 6.5 | 6.1 |
| Consistency of the sauce | 6.4 | 5.5 |
| Consistency of the meat | 6.1 | 5.5 |
| Flavor of the meat | 5.9 | 5.1 |

## Claims

1. A process for the production of a sauce comprising minced meat, tomato, vegetables, edible oils or fats and optional complementary ingredients, wherein the process comprises:
- a step a) of subjecting pellets of a mixture comprising minced meat to baking in a conduction and convection oven, at a temperature of between 160°C and 280°C, for a time of between 0.5 and 30 minutes, thus obtaining baked pellets,
- a step b) of adding, in a cooker, said baked pellets to said tomato, vegetables, edible oils or fats and optional complementary ingredients and
- a step c) of cooking the whole mixture for a predetermined time.

2. The process according to claim 1, wherein said complementary ingredients are selected from the group comprising salt, pepper, sugar and aromatic herbs, including rosemary, sage, mint, oregano, parsley, thyme, bay leaf, cloves, basil, chives, marjoram, nutmeg and coriander.

3. The process according to claim 1 or 2, wherein said vegetables are selected from the group comprising onion, shallot, carrot, celery, leek, garlic and parsley.

4. The process according to claim 3, wherein said vegetables are minced and have a particle size of between 3 mm and 20 mm, preferably between 5 mm and 10 mm.

5. The process according to any one of claims 1-4, wherein said pellets to be baked in the oven of step a) have a length of between 10 mm and 70 mm, preferably between 30 mm and 40 mm, and a thickness of between 3 mm and 15 mm.

6. The process according to claim 5, wherein said mixture pellets further comprise at least one complementary ingredient selected from the group comprising salt, sugar, starch, fiber, pepper, aromatic herbs including rosemary, sage, mint, oregano, parsley, thyme, bay leaf, cloves, basil, chives, marjoram, nutmeg and coriander, and/or tomato and/or at least one vegetable selected from the group consisting of onion, shallot, leek, carrots, celery and garlic.

7. The process according to any one of claims 1-6, wherein, in said step a), said pellets are arranged on a conveyor belt and the oven is a tunnel oven inside which the conveyor belt runs.

8. The process according to claim 7, wherein said conveyor belt is heated to a temperature of 160°C-280°C, preferably 220°C-260°C.

9. The process according to claim 8, wherein the temperature inside said tunnel oven is between 180°C and 280°C, preferably between 220°C and 260°C.

10. The process according to claim 9, wherein in said tunnel oven means for injecting jets of steam and hot air having a temperature of 200°C-300°C, preferably 230°C-280°C, are provided.

11. The process according to any one of claims 7-10, wherein said mixture pellets are produced by extruding a mixture comprising minced meat and optionally one or more complementary ingredients as defined in claim 6 and/or tomato and/or one or more vegetables selected from the group consisting of onion, shallot, leek, carrots, celery and garlic, by means of an extruder provided with a cutter which divides the mixture output from the extruder in the form of a string into pellets having a length of between 10 mm and 70 mm, preferably between 30 mm and 40 mm, and a thickness of between 3 and 15 mm.

12. The process according to any one of claims 7-11, wherein upon leaving the oven said pellets are dropped onto a second conveyor belt, which conveys them to a disaggregation apparatus to free individual pellets from any clumps formed during baking.

13. The process according to any one of claims 1-12, wherein, following baking, said pellets have a length of between 5 and 60 mm, preferably between 7 and 30 mm.

14. The process according to any one of claims 1-13, wherein in said step b) said cooker is provided with mixing means and said pellets are introduced into said cooker already containing inside it a fried mixture obtained from said vegetables, from the optional complementary ingredients and from said edible oils or fats, as well as the tomato, which was subsequently added to said fried mixture.

15. The process according to any one of claims 1-14, wherein said predetermined time of the cooking step c) is between 15 and 120 minutes.

16. The process according to any one of claims 1-15, wherein said minced meat is selected from bovine, pork, ovine, horse, poultry or fish meat and is preferably made from bovine or pork meat or both.

## Patentansprüche

1. Verfahren zur Herstellung einer Soße, die Hackfleisch, Tomate, Gemüse, Speiseöle oder -fette und optional ergänzende Bestandteile umfasst, wobei das Verfahren umfasst:
- einen Schritt a) des Aussetzens von Pellets aus einer Hackfleisch enthaltenden Mischung zu einem Backvorgang in einem Konduktions- und Konvektionsofen bei einer Temperatur zwischen 160°C und 280°C für eine Zeit zwischen 0,5 und 30 Minuten, wodurch gebackene Pellets erhalten werden,
- einen Schritt b) des Hinzufügens der gebackenen Pellets zu der Tomate, dem Gemüse, den Speiseölen oder -fetten und optionalen ergänzenden Zutaten in einen Kocher und
- einen Schritt c) des Kochens der gesamten Mischung für eine vorbestimmte Zeit.

2. Verfahren nach Anspruch 1, wobei die ergänzenden Zutaten ausgewählt sind aus der Gruppe umfassend, Salz, Pfeffer, Zucker und aromatische Kräuter, einschließlich Rosmarin, Salbei, Minze, Oregano, Petersilie, Thymian, Lorbeerblatt, Nelken, Basilikum, Schnittlauch, Majoran, Muskatnuss und Koriander.

3. Verfahren nach Anspruch 1 oder 2, wobei das Gemüse ausgewählt ist aus der Gruppe umfassend Zwiebel, Schalotte, Karotte, Sellerie, Lauch, Knoblauch und Petersilie.

4. Verfahren nach Anspruch 3, wobei das Gemüse zerkleinert wird und eine Teilchengröße zwischen 3 mm und 20 mm, vorzugsweise zwischen 5 mm und 10 mm, aufweist.

5. Verfahren nach einem der Ansprüche 1-4, wobei die im Ofen der Stufe a) zu backenden Pellets eine Länge zwischen 10 mm und 70 mm, vorzugsweise zwischen 30 mm und 40 mm, und eine Dicke zwischen 3 mm und 15 mm aufweisen.

6. Verfahren nach Anspruch 5, wobei die Mischungspellets ferner mindestens einen ergänzenden Bestandteil umfassen, der ausgewählt ist aus der Gruppe umfassend Salz, Zucker, Stärke, Ballaststoffen, Pfeffer, aromatischen Kräutern einschließlich Rosmarin, Salbei, Minze, Oregano, Petersilie, Thymian, Lorbeerblatt, Nelken, Basilikum, Schnittlauch, Majoran, Muskatnuss und Koriander, und/oder Tomate und/oder mindestens ein Gemüse, ausgewählt aus der Gruppe bestehend aus Zwiebel, Schalotte, Lauch, Karotten, Sellerie und Knoblauch.

7. Verfahren nach einem der Ansprüche 1-6, wobei im Schritt a) die Pellets auf einem Förderband angeordnet werden und der Ofen ein Tunnelofen ist, in dem das Förderband läuft.

8. Verfahren nach Anspruch 7, wobei das Förderband auf eine Temperatur von 160°C-280°C, vorzugsweise 220°C-260°C, erhitzt wird.

9. Verfahren nach Anspruch 8, wobei die Temperatur im Inneren des Tunnelofens zwischen 180°C und 280°C, vorzugsweise zwischen 220°C und 260°C, liegt.

10. Verfahren nach Anspruch 9, wobei in dem Tunnelofen Mittel zum Einblasen von Dampf- und Heißluftstrahlen mit einer Temperatur von 200°C-300°C, vorzugsweise 230°C-280°C, vorgesehen sind.

11. Verfahren nach einem der Ansprüche 7-10, wobei die Mischungspellets durch Extrudieren einer Mischung hergestellt werden, die Hackfleisch umfasst und gegebenenfalls einen oder mehrere ergänzende Bestandteile nach Anspruch 6 und/oder Tomate und/oder ein oder mehrere Gemüse ausgewählt aus der Gruppe bestehend aus Zwiebel, Schalotte, Lauch, Karotten, Sellerie und Knoblauch mit Hilfe eines Extruders, der mit einem Messer versehen ist, das den Mischungsausstoß aus dem Extruder in Form eines Fadens in Pellets mit einer Länge zwischen 10 mm und 70 mm, vorzugsweise zwischen 30 mm und 40 mm, und einer Dicke zwischen 3 und 15 mm teilt.

12. Verfahren nach einem der Ansprüche 7-11, bei dem die Pellets beim Verlassen des Ofens auf ein zweites Förderband fallen gelassen werden, welches sie zu einem Zerlegungsapparat befördert, um einzelne Pellets von jedem Klumpen zu befreien, die sich während des Backens gebildet haben.

13. Verfahren nach einem der Ansprüche 1-12, wobei im Anschluss an das Backen die Pellets eine Länge zwischen 5 und 60 mm, vorzugsweise zwischen 7 und 30 mm, aufweisen.

14. Verfahren nach einem der Ansprüche 1-13, bei dem in der Stufe b) der Kocher mit einer Mischvorrichtung versehen wird und die Pellets in den Kocher eingeführt werden, der bereits eine frittierte Mischung enthält, die aus dem Gemüse, den optionalen ergänzenden Zutaten und den Speiseölen oder -fetten hergestellt wurde sowie der Tomate, die anschließend der frittierten Mischung hinzugefügt wurde.

15. Verfahren nach einem der Ansprüche 1-14, wobei die vorbestimmte Zeit des Kochschritts c) zwischen 15 und 120 Minuten beträgt.

16. Verfahren nach einem der Ansprüche 1-15, wobei das Hackfleisch aus Rinder-, Schweine-, Schaf-, Pferde-, Geflügel- oder Fischfleisch ausgewählt ist und vorzugsweise aus Rinder- oder Schweinefleisch oder beidem hergestellt wird.

## Revendications

1. Procédé pour la production d'une sauce comprenant de la viande hachée, de la tomate, des légumes, des huiles ou des graisses comestibles et des ingrédients complémentaires facultatifs, dans lequel le procédé comprend :
- une étape a) consistant à soumettre des boulettes d'un mélange comprenant de la viande hachée à une cuisson dans un four à conduction et convection, à une température comprise entre 160°C et 280°C, pendant une durée comprise entre 0,5 et 30 minutes, ce qui permet d'obtenir des boulettes cuites,
- une étape b) consistant à ajouter, dans un cuiseur, lesdits granulés cuits à ladite tomate, aux légumes, aux huiles ou graisses comestibles et aux ingrédients complémentaires facultatifs et
- une étape c) de cuisson de l'ensemble du mélange pendant un temps prédéterminé.

2. Le procédé selon la revendication 1, dans lequel lesdits ingrédients complémentaires sont choisis dans le groupe comprenant le sel, le poivre, le sucre et les herbes aromatiques, y compris le romarin, la sauge, la menthe, l'origan, le persil, le thym, le laurier, les clous de girofle, le basilic, la ciboulette, la marjolaine, la noix de muscade et la coriandre.

3. Le procédé selon la revendication 1 ou 2, dans lequel lesdits légumes sont sélectionnés dans le groupe comprenant l'oignon, l'échalote, la carotte, le céleri, le poireau, l'ail et le persil.

4. Le procédé selon la revendication 3, dans lequel lesdits légumes sont hachés et ont une taille de particules comprise entre 3 mm et 20 mm, de préférence entre 5 mm et 10 mm.

5. Le procédé selon l'un quelconque des revendications 1-4, dans lequel lesdits granulés à cuire dans le four de l'étape a) ont une longueur comprise entre 10 mm et 70 mm, de préférence entre 30 mm et 40 mm, et une épaisseur comprise entre 3 mm et 15 mm.

6. Le procédé selon la revendication 5, dans lequel lesdits granulés de mélange comprennent en outre au moins un ingrédient complémentaire choisi dans le groupe comprenant le sel, le sucre, l'amidon, la fibre, le poivre, les herbes aromatiques, y compris le romarin, la sauge, la menthe, l'origan, le persil, le thym, le laurier, les clous de girofle, le basilic, la ciboulette, la marjolaine, la noix de muscade et la coriandre, et/ou la tomate et/ou au moins un légume choisi dans le groupe comprenant l'oignon, l'échalote, le poireau, les carottes, le céleri et l'ail.

7. Le procédé selon l'un quelconque des revendications 1-6, dans lequel, dans ladite étape a), lesdits granulés sont disposés sur un tapis roulant et le four est un four tunnel à l'intérieur duquel le tapis roulant passe.

8. Le procédé selon la revendication 7, dans lequel ledit tapis roulant est chauffé à une température de 160°C-280°C, de préférence 220°C-260°C.

9. Le procédé selon la revendication 8, dans lequel la température à l'intérieur dudit four tunnel est comprise entre 180°C et 280°C, de préférence entre 220°C et 260°C.

10. Le procédé selon la revendication 9, dans lequel dans ledit four tunnel est prévu des moyens pour injecter des jets de vapeur et d'air chaud ayant une température de 200°C-300°C, de préférence 230°C-280°C.

11. Le procédé selon l'un quelconque des revendications 7 à 10, dans lequel lesdits granulés de mélange sont produits par extrusion d'un mélange comprenant de la viande hachée et éventuellement un ou plusieurs ingrédients complémentaires tels que définis dans la revendication 6 et/ou de la tomate et/ou un ou plusieurs légumes choisis dans le groupe constitué par l'oignon, l'échalote, le poireau, les carottes, le céleri et l'ail, au moyen d'une extrudeuse munie d'un couteau qui divise le mélange sous forme de ficelle sortant de l'extrudeuse en granulés ayant une longueur comprise entre 10 mm et 70 mm, de préférence entre 30 mm et 40 mm, et une épaisseur comprise entre 3 et 15 mm.

12. Le procédé selon l'un des revendications 7-11, dans lequel, à la sortie du four, lesdits granulés sont déposés sur un second tapis roulant, qui les transporte vers un appareil de désagrégation pour libérer les granulés individuels de toute masse formée pendant la cuisson.

13. Le procédé selon l'un des revendications 1-12, dans lequel, après la cuisson, lesdits granulés ont une longueur comprise entre 5 et 60 mm, de préférence entre 7 et 30 mm.

14. Le procédé selon l'un quelconque des revendications 1-13, dans lequel, dans ladite étape b), ledit cuiseur est muni de moyens de mélange et lesdits granulés sont introduits dans ledit cuiseur contenant déjà à l'intérieur de celui-ci un mélange frit obtenu à partir desdits légumes, des ingrédients complémentaires facultatifs et desdites huiles ou graisses comestibles, ainsi que de la tomate, qui a ensuite été ajoutée audit mélange frit.

15. Le procédé selon l'un quelconque des revendications 1-14, dans lequel ledit temps prédéterminé de l'étape de cuisson c) est compris entre 15 et 120 minutes.

16. Le procédé selon l'un quelconque des revendications 1-15, dans lequel ladite viande hachée est sélectionnée parmi la viande de bovin, de porc, d'ovin, de cheval, de volaille ou de poisson et est de préférence faite de viande de bovin ou de porc ou des deux.
